# EUROPEAN PATENT APPLICATION

(11) **EP 1 616 817 A1**
(43) Date of publication of application: **18.01.2006**
(21) Application number: 05106335.2
(22) Date of filing: 11.07.2005
(51) Int. Cl.: B65G 17/06

(54) **Replaceable snap-on modular overlay for rod and link turn-curve conveyor belts**

(30) Priority: 13.07.2004 IT PD20040187
(71) Applicant: Alit S.r.l., Frazione, Marsango PD 35010 Campo San Martino (IT)
(72) Inventor: Rettore, Michele, 35010 San Giorgio delle Perticate PD (IT); Tomasello, Gianni, 35010 Villa del Conte PD (IT); Malaman, Mirco, 35010 Piazzola sul Brenta PD (IT)
(74) Representative: Modiano, Micaela Nadia

(57) **Abstract**

A modular covering element for bar-type conveyor belts, of the type constituted by two opposite and rigidly coupled series (11, 13, 113) of removable coupling elements (15, 16, 116, 315, 316), a first series (11) for fixing to a first bar (12) of a conveyor belt (50) and a second series (13, 113) for fixing to a subsequent second bar (14) of the belt (50); the coupling elements of one series (11, 13, 113) are offset with respect to the coupling elements of the opposite other series (11, 13, 113). The covering element has an opening (17, 117, 217, 317) which is directed downward for fixing a first series of coupling elements (15, 315) to the first bar (12) by means of a first movement for downward snap insertion, followed by a substantially horizontal second translational movement of the modular element (10, 110, 210, 310) toward the second bar (14). The modular element (10, 110, 210, 310) is engaged with the second bar (14) by means of a third substantially downward rotary snap insertion movement pivoted in the first bar (12), so as to fix the second bar to the second series of coupling elements (16, 116, 316).

## Description

The present invention relates to a modular covering element for bar-type conveyors.

As is known, one widely adopted and appreciated type of conveyor belt is constituted by two parallel chains associated with motorized driving gears, such chains being connected transversely by bars which join corresponding mutually opposite links of said chains.

Modular covering elements suitable to form a substantially grid-like supporting and conveyance surface are then associated with said bars.

In particular, and merely by way of example, this type of conveyor belt with modular covering elements is commonly used in the food sector in processes for cooling, freezing, rising, sterilization, baking, and other similar treatments, for food or in any case for products that have similar production problems.

Such modular covering elements are structured so that they can support not only objects, foodstuffs and products in general with substantial contact surfaces but also small objects, foodstuffs and products, which accordingly need to be supported by a sufficiently continuous and uninterrupted surface.

Currently known modular covering elements for bar-type conveyor belts are generally constituted by two opposite and rigidly coupled series of removable coupling members, a first series for fixing to a first bar of the bar-type conveyor belt and a second series for fixing to a subsequent second bar of the belt.

The coupling members of one series are offset with respect to the coupling members of the opposite series, so that if a first modular element is fixed to a first bar and a second bar, a second modular element can likewise be coupled to the second bar in the spaces not occupied by the coupling members of the first modular element, and to a third subsequent bar, so as to form a flexible supporting net on the conveyor belt.

The offset arrangement of the series of coupling members gives the modular elements a flexibility which adapts in an optimum manner to the bars of the belt even along the bends that the belt is required to trace.

These known modular elements are mainly made of plastics.

Currently known modular elements have a pair of openings, one at each of the two series of coupling members, for snap insertion of a bar of the belt in each opening.

Such openings are for example both directed downward or one is directed downward and one is directed laterally.

The positions of these openings on the coupling members on the one hand allow easy snap insertion of the bars in the openings but on the other hand do not ensure perfect stability of the fixing by snap insertion.

Once the bar has been inserted in the corresponding coupling member, it in fact still remains proximate to the insertion opening, from which the bar might detach as a consequence of an unexpected movement of the bars of the belt or due to other similar events.

Further, the modular element is fixed to the bars of the belt generally with two successive movements, so as to insert by snap action two bars of the belt each in one of the two openings of the modular element.

The second movement for snap insertion of the second bar must be performed while paying attention to avoid unwanted simultaneous disengagement of the modular element from the second bar, an occurrence which is allowed by the need to tension the modular element in order to arrange the second opening so that it faces the second bar.

The aim of the present invention is to provide a modular covering element for bar-type conveyors in which the fixing to the bars of the belt is safer than in known types of modular element.

Within this aim, an object of the present invention is to provide a modular covering element for bar-type conveyors with easier fixing.

Another object of the present invention is to provide a modular covering element for bar-type conveyors which can be installed on known, existing and already-operating kinds of bar-type conveyor belt.

A further object of the present invention is to provide a modular covering element for bar-type conveyors which can be manufactured at low cost with known systems and technologies.

This aim and these and other objects which will become better apparent hereinafter are achieved by a modular covering element for bar-type conveyors, of the type constituted by two opposite and rigidly coupled series of removable coupling elements, a first series for fixing to a first bar of a conveyor belt and a second series for fixing to a subsequent second bar of said belt, the coupling elements of one series being offset with respect to the coupling elements of the opposite other series, said modular element being characterized in that it has an opening which is directed downward and provided to fix a first series of coupling elements to said first bar by means of a first movement for downward snap insertion, followed by a substantially horizontal second translational movement of the modular element toward the second bar, said modular element being engaged with said second bar by means of a third substantially downward rotary snap insertion movement pivoted in the first bar, so as to fix said second bar to the second series of coupling elements.

Further characteristics and advantages of the invention will become better apparent from the description of four preferred but not exclusive embodiments thereof, illustrated by way of non-limiting example in the accompanying drawings, wherein:
Figure 1 is a perspective view of a modular element according to the invention in a first embodiment;
Figure 2 is a top view of the modular element of Figure 1;
Figure 3 is a sectional side view of a modular element according to the invention, taken along the line III-III of Figure 2;
Figure 4 is a top view of a variation of the first embodiment shown in the preceding figures;
Figures 5 to 8 are schematic views of the assembly sequence of a modular element according to the invention;
Figure 9 is a partially sectional side view of a modular element according to the invention in a second embodiment;
Figure 10 is a perspective view of a modular element according to the invention in the second embodiment of Figure 9;
Figure 11 is a partially sectional side view of a modular element according to the invention in a third embodiment;
Figure 12 is a partially sectional side view of a modular element according to the invention in a fourth embodiment;
Figure 13 is a perspective view of a modular element according to the invention in the fourth embodiment of Figure 12;
Figure 14 is a view of a portion of a bar-type conveyor belt equipped with a plurality of modular elements according to the invention.

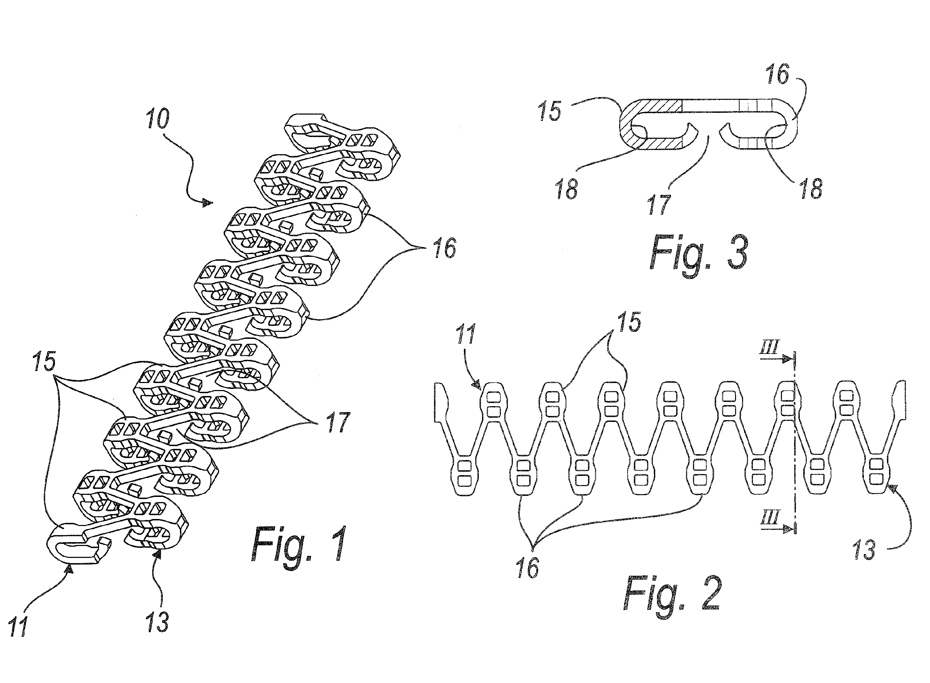

With reference to the figures, a first embodiment of a modular covering element for bar-type conveyor belts according to the invention is shown in Figures 1 to 3, in which it is generally designated by the reference numeral 10.

Such modular element 10 is constituted by two opposite and rigidly coupled series of removable coupling elements, a first series 11 for fixing to a first bar 12 of a conveyor belt 50 and a second series 13 for fixing to a subsequent second bar 14 of said belt.

The coupling elements 15 of the first series 11 are offset with respect to the coupling elements 16 of the opposite second series 13.

The modular element 10 has, in a lower region between the coupling elements 15 and 16, an opening 17 for fixing the first series of coupling elements 11 to the first bar 12 by means of a first movement for snap insertion from above.

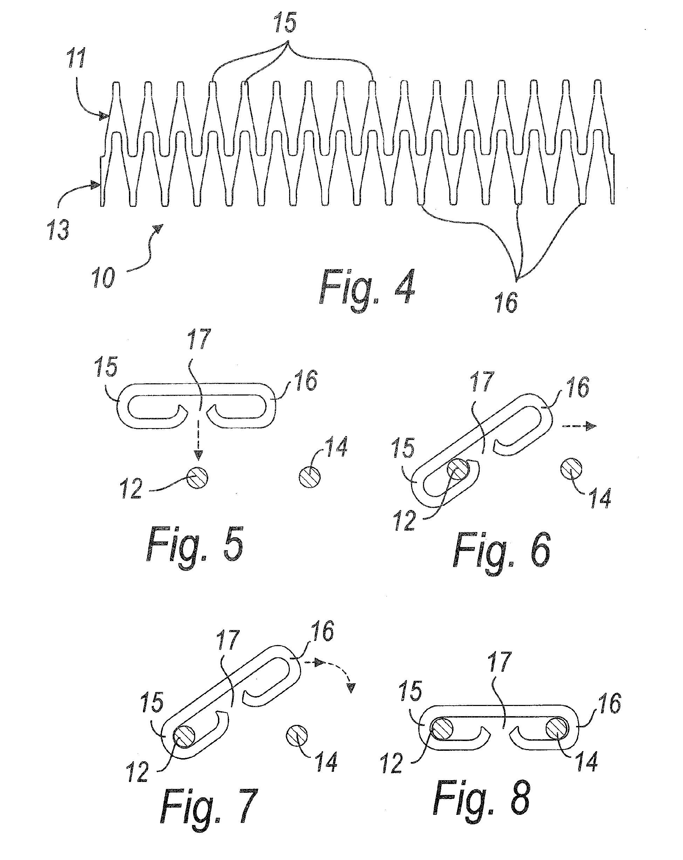

Such first movement, shown schematically in Figure 5, is followed by a second substantially horizontal translational motion of the modular element 10 toward the second bar 14, which is shown in Figure 6.

The modular element 10 is fastened to the second bar 14 by means of a third substantially downward rotary snap insertion movement pivoted on the first bar 12, so as to fix the second bar to the second series of coupling elements 13.

Such third movement is shown schematically in Figure 7.

The bars are rigidly coupled and supported by the links of the lateral chains, not shown, which move the conveyor belt.

In order to position the opening 17 at the second bar 14, the rings that support the two involved bars are moved mutually closer, so as to be able to complete snap insertion.

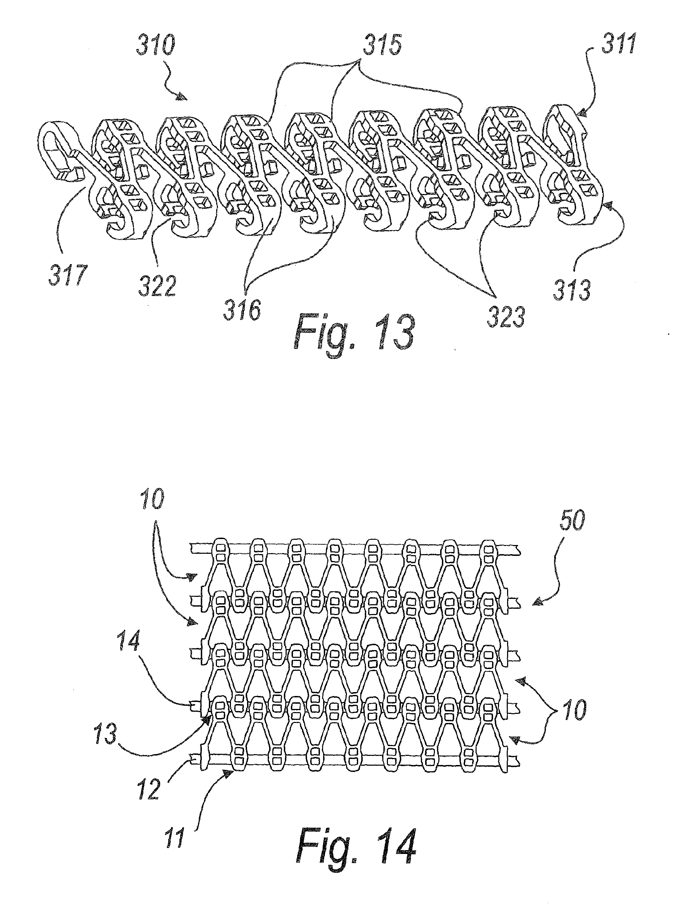

The links of the chains are then released and the bars 12 and 14 are arranged in the coupling elements, respectively 15 and 16, substantially as shown in Figure 13.

In this first embodiment of the modular element according to the invention, snap insertion for fixing the second series of coupling elements 13 to the second bar 14 occurs by means of the same opening 17 which is directed downward.

The downward-facing fixing opening 17 is substantially central with respect to the modular element 10 and equidistant from the internal lateral surfaces 18 of the two series 11 and 13 of coupling elements 15 and 16 respectively.

Such central position for the single opening 17 allows safe fixing of the modular element 10 to the bars 12 and 14, since the opening 17 is arranged, once fixing has been completed, at a distance from the bars 12 and 14, as shown in Figure 8.

This eliminates the risks of sudden and unwanted separation of the modular element 10, unless a specific manual intervention is performed by an operator who wishes to disengage it intentionally from the bars for replacement or repair.

A constructive variation of the invention in its first embodiment is shown in Figure 4, which shows that with respect to Figure 2 the pitch between two successive coupling elements 15 (as between two successive coupling elements 16) of a same series 11 or 13 is halved.

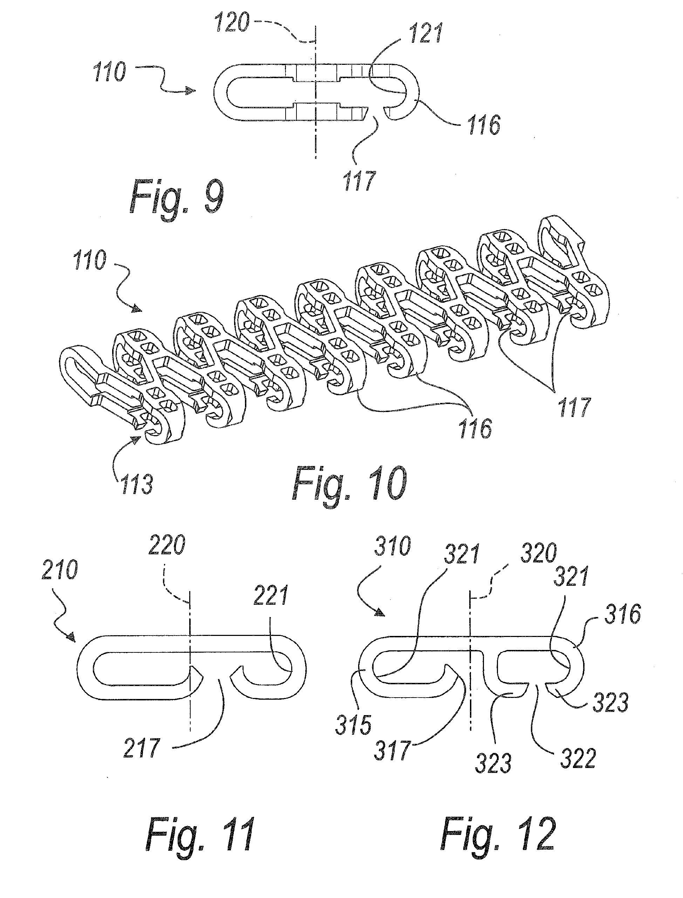

In a second embodiment of the invention, shown in Figures 9 and 10 and designated therein by the reference numeral 110, the modular element is characterized in that the downward-facing fixing opening 117 is located between the central plane 120 of the modular element 110 and the internal lateral surface 121 of the coupling elements 116 of the second series 113 of coupling elements.

A third embodiment of the invention, shown in Figure 11 and designated by the reference numeral 210 therein, is similar to the second embodiment and differs from it in the position of the downward-facing opening 217, which here lies closer to the central plane 220 than to the internal lateral surface 221.

A fourth embodiment of the modular element according to the invention, shown in Figures 12 and 13 and designated by the reference numeral 310 therein, has, in addition to a first downward-facing opening 317, an additional downward-facing opening 322 for the snap insertion of the second bar.

The first opening 317 allows to fix the first bar 12 to the first series 311 of coupling elements 315 and the second opening 322 allows snap insertion of the second bar 14 in the second series 313 of coupling elements 316.

In such fourth embodiment of the modular element 310, the first opening 317 is central with respect to the modular element 310 and is equidistant from the internal lateral surfaces 321 of the two series of couplings 315 and 316, while the second opening 322 is arranged between the central plane 320 and the internal lateral surface 321 of one of the two series of coupling elements.

The modular element 310 combines with the simplicity of the first two engagement movements, i.e., snap insertion of the first bar in the first opening 317 and translational motion of the modular element toward the second bar, the convenience of the second opening 322, which allows to avoid acting by moving mutually closer the links of the chains of the conveyor belt in order to insert the second bar, as instead required in the preceding three embodiments of the invention.

The modular element 310 further retains the characteristics of assurance of fixing by way of the distance between the first opening 317 and the internal surface 321 of the coupling elements 315, which is substantially the same as the first embodiment 10 of the invention.

The coupling elements 316, which in this fourth embodiment are provided with the second opening 322, are formed by two mutually facing curved tabs 323, which are directed toward each other.

The ends of the tabs 323 form the second opening 322.

The modular element according to the invention, in the various embodiments described here, is constituted by a single body obtained by molding plastics.

In practice it has been found that the invention thus described solves the problems noted in known types of modular covering element for bar-type conveyors.

In particular, the present invention provides a modular covering element for bar-type conveyors in which the fixing of the belt to the bars is safer than in known types of modular element.

Moreover, the present invention provides a modular covering element for bar-type conveyors with easier fixing.

Still further, the present invention provides a modular covering element for bar-type conveyors that can be installed on existing and already-operating known kinds of bar-type conveyor belt.

Moreover, the present invention provides a modular covering element for bar-type conveyors which can be manufactured cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to the requirement and the state of the art.

The disclosures in Italian Patent Application No. PD2004A000187 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A modular covering element for bar-type conveyor belts, of the type constituted by two opposite and rigidly coupled series (11, 13, 113) of removable coupling elements (15, 16, 116, 315, 316), a first series (11) for fixing to a first bar (12) of a conveyor belt (50) and a second series (13, 113) for fixing to a subsequent second bar (14) of said belt (50), the coupling elements of one series (11, 13, 113) being offset with respect to the coupling elements of the opposite other series (11, 13, 113), said modular element being **characterized in that** it has an opening (17, 117, 217, 317) which is directed downward for fixing a first series of coupling elements (15, 315) to said first bar (12) by means of a first movement for downward snap insertion, followed by a substantially horizontal second translational movement of the modular element (10, 110, 210, 310) toward the second bar (14), said modular element (10, 110, 210, 310) being engaged with said second bar (14) by means of a third substantially downward rotary snap insertion movement pivoted in the first bar (12), so as to fix said second bar to the second series of coupling elements (16, 116, 316).

2. The modular element according to claim 1, **characterized in that** the snap insertion for fixing the second series (13) of coupling elements (16) to the second bar (14) occurs through said downward-facing opening (17).

3. The modular element according to claim 1, **characterized in that** it is provided with an additional downward-facing opening (322) for the snap insertion of said second bar (14) in said second series (313) of coupling elements (316).

4. The modular element according to claims 1 and 2, **characterized in that** said downward-facing fixing opening (17) is substantially central with respect to the modular element (10) and is equidistant from the internal lateral surfaces (18) of the two series (11, 13) of coupling elements (15, 16).

5. The modular element according to claims 1 and 2, **characterized in that** said downward-facing fixing opening (117, 217) is arranged between the central plane of the modular element (120,220) and the internal lateral surface (121, 221) of the coupling elements of one of the two series of coupling elements.

6. The modular element according to claims 1 and 3, **characterized in that** said opening (317) is central with respect to the modular element (310) and equidistant from the internal lateral walls (321) of the two series of coupling elements (311, 313), said additional opening (322) being arranged between the central plane of the modular element (320) and the internal lateral surface (321) of the coupling elements of one of the two series (311, 313) of coupling elements.

7. The modular element according to claim 6, **characterized in that** the coupling elements (316) provided with said additional opening (322) are formed by two mutually facing curved tabs (323) which are directed toward each other, the ends of said tabs (323) forming said additional opening (322).

8. The modular element according to one or more of the preceding claims, **characterized in that** it is constituted by a single body obtained by molding plastics.
